# EUROPEAN PATENT APPLICATION

(11) **EP 3 231 282 A1**
(43) Date of publication of application: **18.10.2017**
(21) Application number: 17166624.1
(22) Date of filing: 13.04.2017
(51) Int. Cl.: A01K 63/02, A01K 63/04, A22C 29/04, A23L 17/50, A01K 61/54

(54) **METHOD OF TREATING AND PACKAGING LIVE BIVALVE MOLLUSK**

(30) Priority: 14.04.2016 NL 2016606
(71) Applicant: Krijn Verwijs Yerseke B.V., 4401 NT Yerseke (NL)
(72) Inventor: Verwijs, Abraham Charles, 4401 NT Yerseke (NL); Verwijs, Willem Abraham, 4401 NT Yerseke (NL)
(74) Representative: De Vries & Metman

(57) **Abstract**

The invention relates to a method of treating and packaging live bivalve mollusk (LBM), in particular mussels, characterized by reducing, preferably before packaging, the number of microorganisms inside the live bivalve mollusk to less than 1000 colony forming units (CFU) per gram.

## Description

The invention relates to a method of treating and packaging live bivalve mollusk (LBM), in particular mussels, and to a package containing LBM.

NL 9301153 relates to a method for processing mussels, comprising the following steps: - cleaning, separating and/or sorting the mussels; - allowing the seafood to remain in salt water for a predetermined time, during at least part of which the salt water is cooled to below 10 degree C; and - packaging the mussels at a temperature of below 10 degree C, so that they are kept closed. NL 9301153 claims that this method improves the quality and shelf life of fresh mussels, since the metabolism of the food is stopped during the so-called conditioning phase, i.e. during the residence in salt water after mechanical treatment.

NL 1034699 relates to a method for preparing prepacked, living crustaceans or shellfish comprises bringing the animals into contact with at least 0.3 1 purified seawater per kg animal, and allowing the animals to incubate over a period of time sufficient to revitalize the animals.

NL 1024663 relates to processing mussels and involves only a part of a trade stock of mussels being preprocessed and/or cleaned and packed. In this way, a quantity of mussels, prior to cleaning, is placed in storage containers on the shore in cooled seawater. The cooled seawater flows through the containers and is processed in a recirculation system for re-use. The mussels, prior to being placed in the storage containers, are rinsed and loosened from each other without damage to the byssus internal threads. At that stage, they are also sorted as to size. The seawater in the recirculation system is enriched with oxygen, preferably by aeration. At least a part of the stored mussels remains in the containers for at least twenty-four hours.

In practice, time-until-death or shelf life of live bivalve mollusk, in particular mussels packaged in (sea)water at subatmospheric pressure, is limited to about seven or eight days.

It is an object of the present invention to further and safely increase shelf life of live bivalve mollusk.

To this end, the method according to the present invention is characterized by reducing, preferably before packaging, the number of microorganisms inside the live bivalve mollusk (LBM), i.e. in the meat and the water inside the LBM combined, to less than 1000 colony forming units (CFU) per gram.

In an embodiment, the number of microorganisms inside the live bivalve mollusk is reduced to less than 800, preferably less than 600, preferably less than 500, preferably less than 400, preferably less than 300, preferably less than 200 colony forming units (CFU) per gram.

It was found that lowering CFU below these values has a profound effect on shelf life. It appeared possible to extend shelf life beyond eight days, e.g. to ten or twelve days.

In an embodiment, the treating of the live bivalve mollusk comprises the steps of depuration, e.g. 2 to 30 hours depending on temperature and origin of the LBM, cleaning, cooling, and buffering, i.e. allowing the live bivalve mollusk to dwell/reside in cooled water, preferably for at least 2 minutes, preferably for at least 4 minutes, preferably for at least 6 minutes, preferably for at least 8 minutes. In this embodiment, all these steps are carried out in water, preferably salt water, e.g. seawater, and, at least in one of these steps, e.g. during cleaning, cooling, buffering and/or packaging, the number of microorganisms in the water is less than 40, preferably less than 20, preferably less than 10, preferably less than 5, preferably less than 1 colony forming units (CFU) per milliliter water.

Carrying out one or more of these steps - depuration, cleaning, cooling, buffering, and/or packaging - in at least substantially sterile water was found to be an effective way of reducing the number of micro-organisms in and on the live bivalve mollusc.

In an embodiment the water is purified by means of at least one of UV radiation, preferably pulsed UV radiation, ozonation, (electrochemical) chlorination, (cold) plasma treatment or (hydrogen) peroxide treatment.

In a further embodiment, the UV radiation has a power of at least 20 mJ/cm2, preferably at least 30 mJ/cm2, preferably at least 35 mJ/cm2, preferably a power in a range from 20 mJ/cm2 to 100 mJ/cm2.

In another embodiment, before UV purification, particles, such as silt, are removed from the water. In a refinement, the particles are removed by means of a filter, for instance a sieve, preferably a bow screen sieve.

In another embodiment, before UV purification, the water is subjected to skimming, in particular protein skimming, e.g. using an Emyg skimmer or similar skimming apparatus.

In another embodiment, before UV purification, the UV transmittance of the water is increased to at least 75%, preferably at least 80%.

Lowering and maintaining the number of micro-organisms below the CFU values specified above requires efficacious and consistent measures, preferably a cascade of such measures, preferred examples of which are mentioned above. E.g., filtering and increasing the UV transmittance of the water followed by (pulsed) high power UV treatment appeared an effective way of reaching a sufficiently low CFU value.

In an embodiment, the water is purified to at least a 5 log, preferably at least a 6 log reduction of bacteria and/or at least a 3 log, preferably at least a 4 log reduction of viruses.

In another embodiment, to preserve the obtained increase of shelf life, the live bivalve mollusk are cooled to and packaged at a temperature in a range from -1 to 5 °C, preferably from 0 to 4 °C, preferably from 0,5 to 3 °C.

In another embodiment, the method comprises the step of transferring the live bivalve mollusk to a package, e.g. a tray of a thermoplastic material, creating a subatmospheric pressure in the package, preferably a subatmospheric of more than 200 mbar, preferably more than 300, preferably more than 400 mbar below atmospheric pressure, and sealing the package.

The invention also relates to a package, e.g. a sealed tray or a hessian bag, containing live bivalve mollusk (LBM), in particular mussels, characterized in that the number of microorganisms inside the live bivalve mollusk is less than 1000 colony forming units (CFU) per gram.

In an embodiment, the number of microorganisms inside the live bivalve mollusk bivalves in the package is less than 800, preferably less than 600, preferably less than 500, preferably less than 400, preferably less than 300, preferably less than 200 colony forming units (CFU) per gram.

Within the framework of the present invention, Colony Forming Units or CFU inside the live bivalve mollusk is measured in accordance with NEN-EN-ISO 4833-1:2013. The number of microorganisms in the water surrounding the live bivalve mollusc (used e.g. for depuration, cleaning, cooling, buffering, and/or packaging) is measured in accordance with NEN-EN-ISO 6222:1999. In practice, CFU is also referred to as colony count or culturable micro-organisms.

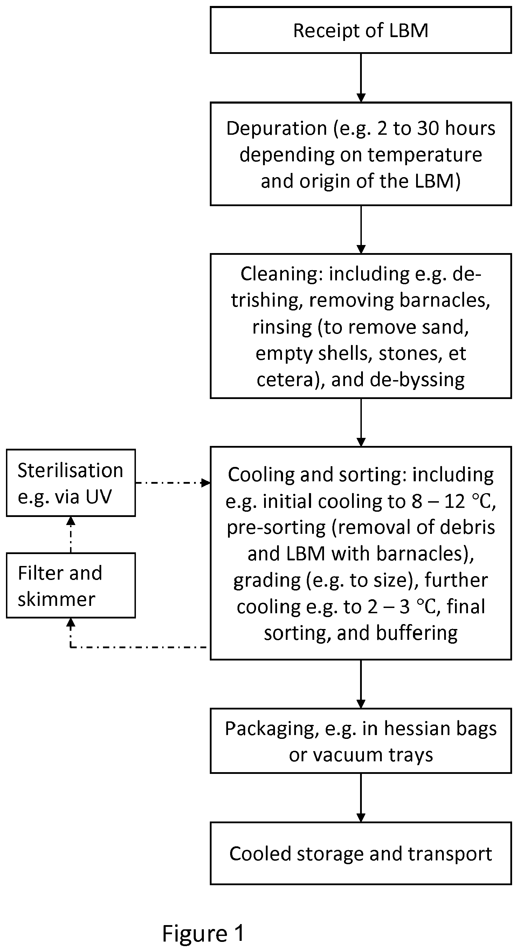

The invention will now be explained in more detail with reference to the Figure, which schematically shows an embodiment of a method of treating and packaging live bivalve mollusk.

Live bivalve mollusk (LBM), in this example mussels, are dredged and subsequently rinsed and destoned on board a mussel harvesting vessel. At the treatment and packaging plant, the mussels are transferred to one or more basins filled with seawater for depuration, e.g. for 2 to 30 hours depending on temperature and origin of the LBM. The seawater is circulated over the basins and an UV filter for each of the basins.

After depuration, the mussels are cleaned, typically by de-trishing, removing barnacles, rinsing in seawater to remove sand, empty shells, stones, et cetera, and de-byssing.

In the next stage, the mussels are cooled, sorted, and buffered. This involves, e.g., initial cooling to a temperature in a range from 8 to 12 °C, pre-sorting, removal of debris and mussels with barnacles, grading to size, further cooling to a temperature in a range from 2 to 3 °C, final sorting, and buffering for at least 10 minutes. The seawater used in this entire stage was treated to reduce the number of microorganisms to less than 5 colony forming units (CFU) per ml water.

More specifically, the seawater in this cooling and buffering stage was filtered by means of a bow screen sieve and the filtered seawater was treated with a protein skimmer to significantly increase the UV transmittance of the seawater. Subsequently, the seawater was purified by means of (pulsed) UV radiation with a Trojan UV Swift SC D12 operated at 35 mJ/cm2 further reducing the number of microorganisms to less than 5 colony forming units (CFU) per ml water, e.g. to 1 colony forming unit (CFU) per ml water. This almost sterile seawater was fed or, depending on the configuration of the plant, circulated back to the beginning of this stage (dotted line in the Figure) or to one or more of the individual steps in this stage.

The duration of buffering depends, as a matter of course, on upstream and downstream stages, but, in accordance with the present invention, buffering is also employed to allow the mussels sufficient dwell time in the almost sterile seawater to further reduce the number of microorganisms inside the live bivalve mollusk to less than 1000 colony forming units (CFU) per gram, e.g. less than 200 CFU per gram, e.g. to about 80 CFU per gram.

Finally, the mussels were cooled to 1 °C, packaged, e.g. in hessian bags or vacuum trays, in the latter instance at a pressure of e.g. 400 mbar below atmospheric pressure, stored and transported. The mussels thus treated and packaged had a shelf life of twelve days.

The invention is not restricted to the above-described embodiments, which can be varied in a number of ways within the scope of the claims. For instance, the present method is also suitable for treating and packaging other LBM, such as cockles and oysters.

## Claims

1. Method of treating and packaging live bivalve mollusk (LBM), in particular mussels, **characterized by** reducing, preferably before packaging, the number of microorganisms inside the live bivalve mollusk to less than 1000 colony forming units (CFU) per gram.

2. Method according to claim 1, wherein the number of microorganisms inside the live bivalve mollusk is reduced to less than 800, preferably less than 600, preferably less than 500, preferably less than 400, preferably less than 300, preferably less than 200 colony forming units (CFU) per gram.

3. Method according to claim 1 or 2, wherein the treating of the live bivalve mollusk comprises the steps of depuration, cleaning, cooling, and buffering, all in water.

4. Method according to claim 3, wherein in at least one of the steps of depuration, cleaning, cooling, buffering and/or packaging, the number of microorganisms in the water is less than 40, preferably less than 20, preferably less than 10, preferably less than 5, preferably less than 1 colony forming units (CFU) per milliliter water.

5. Method according to claim 3 or 4, wherein the water is purified by means of at least one of UV radiation, preferably pulsed UV radiation, ozonation, chlorination, plasma treatment or peroxide treatment.

6. Method according to claim 5, wherein the UV radiation has a power of at least 20 mJ/cm2, preferably at least 30 mJ/cm2, preferably at least 35 mJ/cm2, preferably a power in a range from 20 mJ/cm2 to 100 mJ/cm2.

7. Method according to claim 5 or 6, wherein, before UV purification, particles, such as silt, are removed from the water.

8. Method according to claim 7, wherein the particles are removed by means of a filter, for instance a sieve, in particular a bow screen sieve.

9. Method according to claim 7 or 8, wherein before UV purification, the water is subjected to skimming, in particular protein skimming.

10. Method according to any one of claims 5-9, wherein before UV purification, the UV transmittance of the water is increased to at least 75%, preferably at least 80%.

11. Method according to any one of claims 5-10, wherein the water is purified to at least a 5 log, preferably at least a 6 log reduction of bacteria and/or at least a 3 log, preferably at least a 4 log reduction of viruses.

12. Method according to any one of the preceding claims, wherein the live bivalve mollusk are cooled to and packaged at a temperature in a range from -1 to 5 °C, preferably 0 to 4 °C, preferably 0,5 to 3 °C.

13. Method according to any one of the preceding claims, comprising the step of transferring the live bivalve mollusk to a package, creating a subatmospheric pressure in the package, preferably a subatmospheric of more than 200 mbar, preferably more than 300, preferably more than 400 mbar below atmospheric pressure, and sealing the package.

14. Package containing live bivalve mollusk (LBM), in particular mussels, **characterized in that** the number of microorganisms inside the live bivalve mollusk is less than 1000 colony forming units (CFU) per gram.

15. Package according to claim 14, wherein the number of microorganisms inside the live bivalve mollusk is less than 800, preferably less than 600, preferably less than 500, preferably less than 400, preferably less than 300, preferably less than 200 colony forming units (CFU) per gram.
